# EUROPEAN PATENT APPLICATION

(11) **EP 4 186 393 A1**
(43) Date of publication of application: **31.05.2023**
(21) Application number: 22210002.6
(22) Date of filing: 28.11.2022
(51) Int. Cl.: A47D 9/00, A47D 13/02, B62B 9/10, B62B 7/10, B62B 7/14, B62B 7/08, B62B 9/20

(54) **FOLDABLE BASSINET AND FOLDABLE STROLLER WITH THE FOLDABLE BASSINET**

(30) Priority: 29.11.2021 NL 2029950
(71) Applicant: Royalty Bugaboo GmbH, 6300 Zug (CH)
(72) Inventor: NIEUWENHUIZEN, Marco Willem Hendricus, CH-6300 Zug (CH); HOGELAND, Mattijs, CH-6300 Zug (CH); VOS, Daan Jans, CH-6300 Zug (CH)
(74) Representative: Miller Sturt Kenyon

(57) **Abstract**

The present application discloses a foldable bassinet comprising a foldable frame which may be moved between an unfolded condition and a folded condition and a bed on which a child may be placed, wherein the bed comprises a movable bed part (17b) which is configured to move from a first position to a second position when a child is placed on the bed, and wherein the foldable bassinet further comprises a blocking element (17d) which is moved by the movement of the movable bed part (17b) from a retracted position when the movable bed part (17b) is in its first position to a blocking position when the movable bed part (17b) is in its second position, wherein the blocking position is one at which the blocking element (17d) prevents or restricts the movement of a folding movement part (46) of the foldable bassinet, which folding movement part (46) moves either when the foldable frame is moved from its unfolded condition to its folded condition or which first moves to then allow the foldable frame to begin moving from its unfolded condition to its folded condition, such that the foldable frame is prevented from being moved to its folded condition when a child is present on the bed. A foldable stroller including the foldable bassinet is also disclosed.

## Description

### Field of the invention

The present invention relates to a foldable bassinet and foldable stroller.

### Background

Strollers comprising a bassinet supported by a wheeled chassis frame provide a convenient means for a parent or other carer to transport a child. Such strollers are however typically relatively large and bulky. Foldable stroller designs have therefore been put forward in which both the chassis frame and bassinet are foldable, to occupy less space and generally be more manageable by a user e.g. for storage or transport. Foldable bassinets (whether or of a type being mountable on a stroller, or as a standalone product) have also been proposed for similar storage and transport reasons.

It is however highly desirable to prevent inadvertent folding of a bassinet (whether or not mounted to a stroller) when a child is present in the bassinet.

### Statements of invention

According to a first aspect of the present invention, there is provided a foldable bassinet comprising a foldable frame which may be moved between an unfolded condition and a folded condition and a bed on which a child may be placed, wherein the bed comprises a movable bed part which is configured to move from a first position to a second position when a child is placed on the bed, and wherein the foldable bassinet further comprises a blocking element which is moved by the movement of the movable bed part from a retracted position when the movable bed part is in its first position to a blocking position when the movable bed part is in its second position, wherein the blocking position is one at which the blocking element prevents or restricts the movement of a folding movement part of the foldable bassinet, which folding movement part moves either when the foldable frame is moved from its unfolded condition to its folded condition or which first moves to then allow the foldable frame to begin moving from its unfolded condition to its folded condition, such that the foldable frame is prevented from being moved to its folded condition when a child is present on the bed.

Preferably, the foldable bassinet further comprises a biasing element which acts to bias the movable bed part to its first position when a child is not present on the bed, resulting in the blocking element being moved by the movable bed part to its retracted position, being a position which does not block the movement of the folding movement part of the foldable bassinet.

Preferably, the bias of the biasing element is overcome by placing a mass of 1 kg or more, preferably 1.5 kg or more, and more preferably 2 kg or more, on the movable bed part, such that the movable bed part moves to its second position when a child equal to or greater than said mass is placed on the movable bed part.

Preferably, the folding movement part comprises part of the foldable frame, or is a part connected to the foldable frame. Or, for example, the foldable frame may comprise a locking mechanism which must be released before the foldable frame can begin moving from its unfolded condition to its folded condition, and the folding movement part may instead form part or all of the locking mechanism.

Preferably, the bed further comprises a planar bed plate to which the movable bed part is movably attached.

Preferably, the movable bed part is pivotally attached to the planar bed plate.

Preferably, the movable bed part is provided beneath the planar bed plate.

Preferably, the movable bed part comprises one or more movable arms.

Preferably, the movable bed part comprises at least two arms which are movable independently of each other.

Preferably, different ones of the at least two arms are located on respective lateral sides of the bassinet.

Preferably, the planar bed plate comprises a plurality of apertures, wherein the one or more movable arms are mounted underneath the planar bed plate, and wherein the one or more movable arms are each provided with one or more projections which protrude through respective ones of the plurality of apertures in the bed plate.

Preferably, the one or more arms are pivotally mounted to the bed plate by respective hinges having a hinge axis which is parallel or perpendicular to a longitudinal axis of the bassinet.

Preferably, the one or more arms are reinforced by one or more strengthening ribs.

Preferably, the one or more arms extend for half or less than half of the longitudinal length of the bassinet and are located at an end of the bassinet at which the head of a child is intended to be placed.

Preferably, the bed is connected to the foldable frame.

Preferably, the blocking element is provided on the movable bed part.

According to a second aspect of the present invention, there is provided a foldable stroller comprising the foldable bassinet of the first aspect and a foldable chassis supporting the foldable bassinet.

### List of figures

In order that the present invention may be more readily understood, embodiments thereof will now be described, by way of example only, with reference to the accompanying drawings, of which:
FIGURES 1 and 2 show an embodiment of a stroller aspect of the present invention;
FIGURES 3A to 3E show the process for folding the stroller;
FIGURES 4A to 4C show the bassinet in isolation, the bassinet itself being an embodiment of a bassinet aspect of the present invention;
FIGURES 5A to 5E show a folding joint of the bassinet;
FIGURES 6A to 6C show the process for folding the bassinet independently of the stroller chassis;
FIGURES 7A to 7E show a button housing of the stroller of Fig. 1;
FIGURES 8A to 8C show a locking mechanism of the stroller of Fig. 1;
FIGURES 9A to 9D and FIGURE 10 show a joint of the chassis of the stroller of Fig. 1;
FIGURES 11A and 11B and 12A to 12C show further details of the joint of Figs. 9 and 10;
FIGURES 13A to 13D show a self stand of the stroller;
FIGURES 14A to 14D show a first embodiment of a foldable bassinet aspect of the present invention;
FIGURES 15A to 15G show a second embodiment of a foldable bassinet aspect of the present invention, with FIGURE 15G showing a modification part thereof;
FIGURES 16A to 16E show a third embodiment of a foldable bassinet aspect of the present invention; and
FIGURES 17A TO 17E show a fourth embodiment of a foldable bassinet aspect of the present invention.

### Description of exemplary embodiments

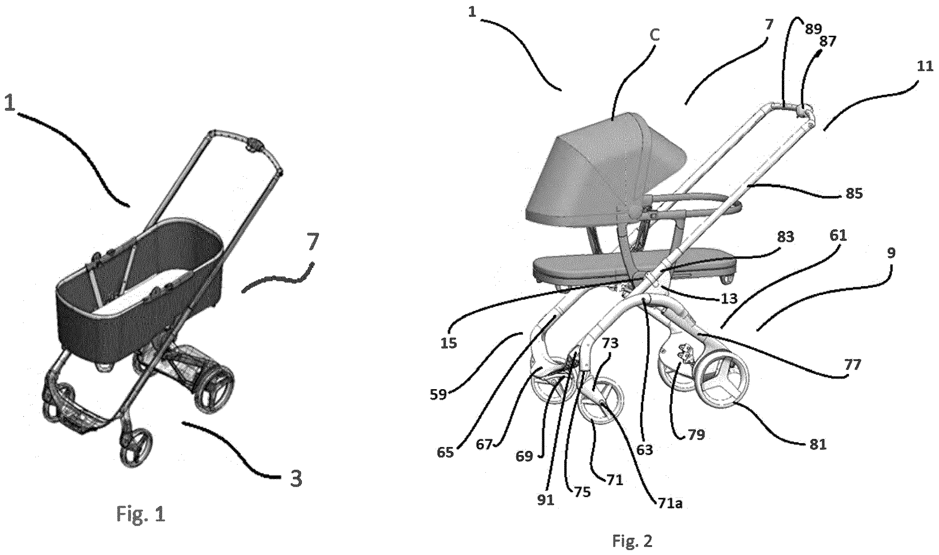

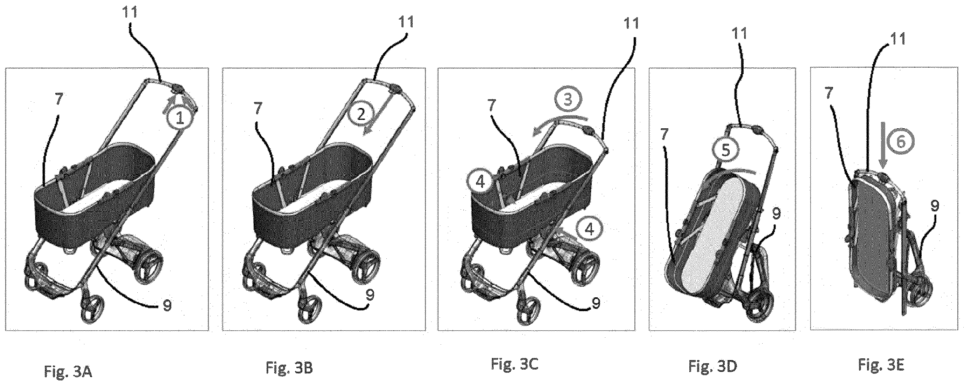

Fig. 1 shows a foldable stroller 1 according to an embodiment of a foldable stroller aspect of the present invention, and which comprises a wheeled chassis 3 supporting a foldable bassinet 7, being itself a first embodiment of a foldable bassinet aspect of the present invention. As shown in Figs. 2 and 3 and further described below, the wheeled chassis 3 and bassinet 7 may fold in a co-operative manner, with the bassinet 7 still mounted to the foldable chassis 3. The foldable bassinet 7 is however configured to prevent the bassinet 7 from being inadvertently folded whilst a child is present within the bassinet 7.

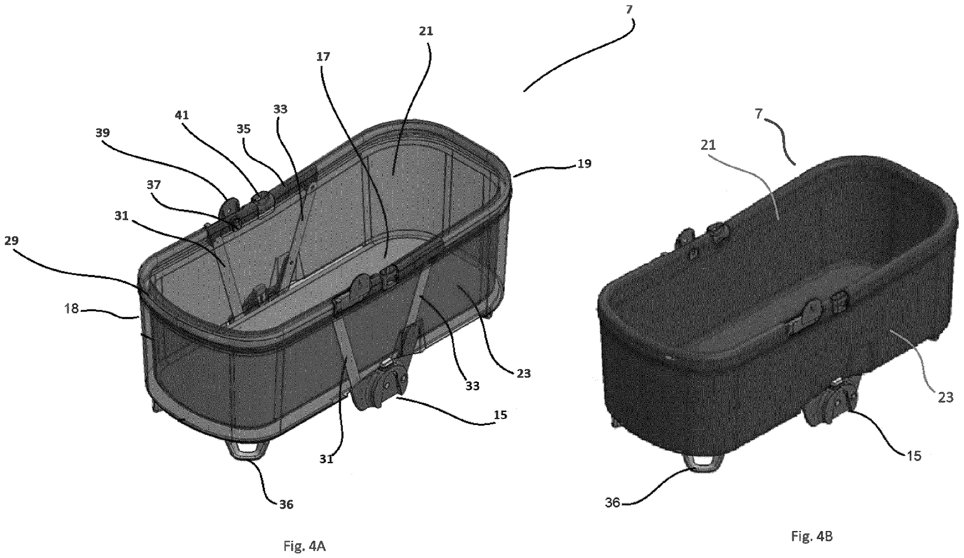

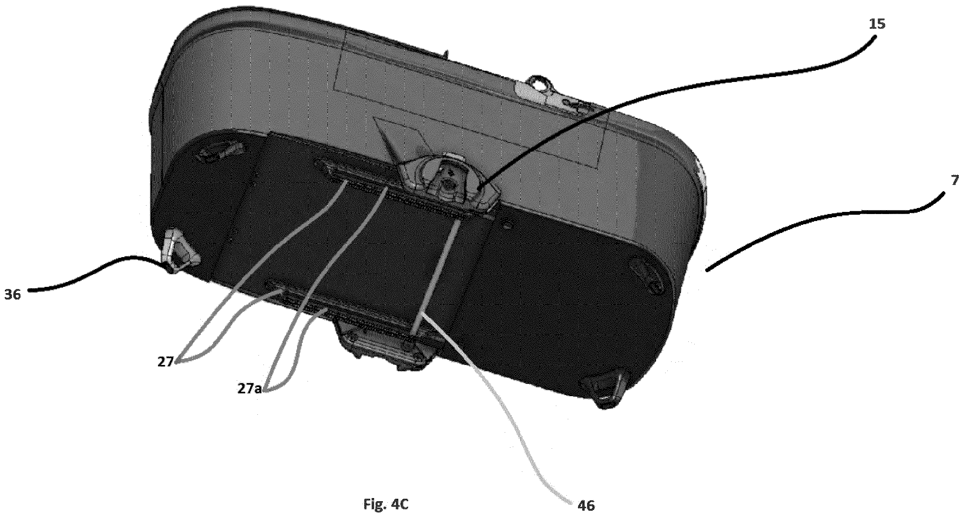

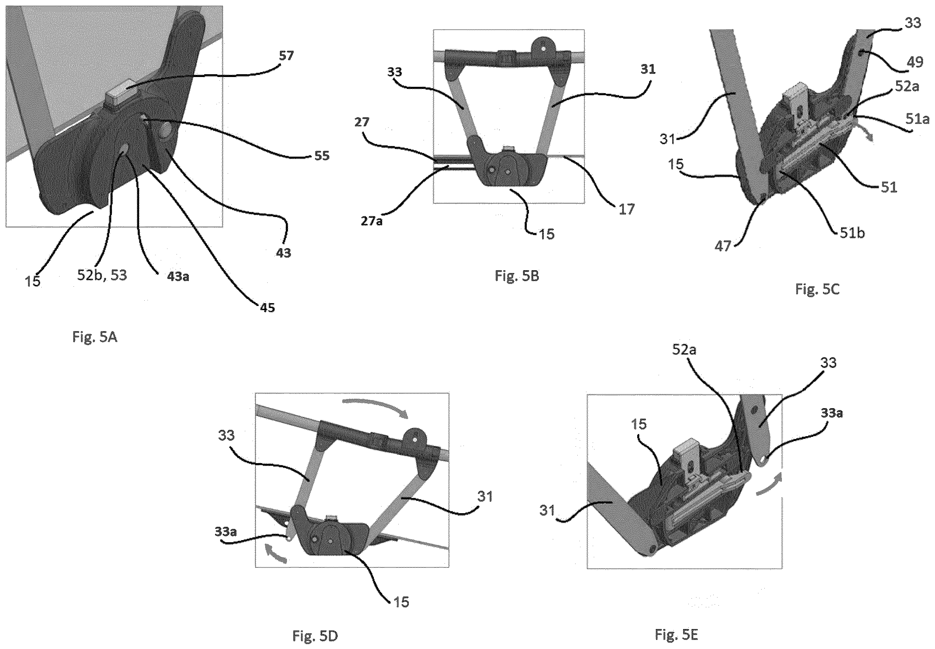

The bassinet 7 is shown in greater detail in the various parts of Fig. 4 and comprises a bed 17 on which an infant may be placed surrounded by peripheral side walls 18 formed from a foldable frame 19 covered by inner and outer layers of fabric 21, 23 (the fabric layers being shown in phantom in Fig. 4A). The foldable frame 19 itself comprises an upper frame 29 joined by pairs of hinged first and second connecting arms 31, 33 to bassinet joints 15 slidably mounted on each lateral side of the bassinet 7 and connected by a laterally-extending joint connecting rod 46 located on the underside of the bassinet (see Fig. 4C). First (upper) ends of the connecting arms of each pair of hinged first and second connecting arms 31, 33 are pivotally mounted to a respective mounting sleeve 35 fixed to each lateral side of the upper frame 29 (see Fig. 5D); second (lower) ends of the connecting arms 31, 33 are mounted to the joints 15. The joint connecting rod 46 is slidably fitted into slots 27a provided in mounting plates 27 which are located on each lateral side of the underside of the bed 17 (see Figs. 4C and 5B) to slidably mount each joint 15 relative to the bed 17. Feet 36 are provided on the underside of the bed 17 to stabilise the bassinet 7 on the floor (or other support surface) when the bassinet 7 is used independently of the chassis 3. Parasol, canopy and carry handle interfaces 37, 39, 41 are also provided on the upper frame 29 of the bassinet 7, and to which a parasol, canopy and carry handle (not shown) may be removably attached by a user.

The joint 15 on a first lateral side of the frame 19 is shown in greater detail in Fig. 5; the joint 15 on the second lateral side of the frame 19 takes a corresponding configuration and hence is not described further.

As shown in Fig. 5A, the joint 15 comprises a joint body 43 having on its outer surface a mounting portion 45, which in the present embodiment comprises a generally triangular-shaped recess with a rounded apex uppermost, which co-operates with a mounting portion on the corresponding joint of the chassis 3 (described below) to mount the bassinet 7 on the chassis 3. A bassinet-to-chassis mounting lock 55 and corresponding release button 57 are further provided on the joint body 43. The bassinet-to-chassis mounting lock 55 automatically engages with a corresponding part of the chassis 3 when the bassinet 7 is mounted on the chassis 3, to lock the bassinet 7 in place and prevent its inadvertent release. This locking engagement is released by pressing the release button 57, when it is desired to remove the bassinet 7 from the chassis 3.

As best seen from Figs. 5C to 5E, the second (lower) end of the first connecting arm 31 is pivotally mounted to the joint body 43 at pivot point 47. Similarly, the second connecting arm is pivotally mounted to the joint body at pivot point 49. In the unfolded state of the bassinet 7, a bassinet locking lever 51 is biased into locking engagement with the second connecting arm 33, preventing the second connecting arm 33 from pivoting relative to the joint body 43.

More specifically, in the present embodiment, the bassinet locking lever 51 is provided with two laterally-extending protrusions 52a, 52b. The first of these protrusions 52a (see Fig. 5C) is located at a first end 51a of the lever 51, distal from a pivotally mounted second end 51b, and is biased by a biasing element such as a spring (not shown) to protrude through and thus engage with an aperture 33a formed at the second (lower) end of the second connecting arm 33. The second of these protrusions 52b (see Fig. 5A) is provided between the first and second ends of the lever 51, and extends through and thus engages with an aperture 43a in the joint body 43. In this condition, the second connecting arm 33 is fixed in place relative to the joint body 43, as shown in Figs. 5A and 5B. Because the second connecting arm 33 is fixed in place relative to the joint body 43, the first connecting arm 31 and joint body 43 are likewise held in a fixed position relative to the other parts of the bassinet frame 19, meaning that the bassinet 7 is rigidly held in the unfolded condition shown in Fig. 4A.

Seen from the outside, the second laterally-extending protrusion 52b of the bassinet locking lever 51 defines a bassinet unlocking button 53 located to coincide with the position of the mounting portion 45. Pressing this button 53 causes the lever 51 to rotate in the direction of the arrow shown in Fig. 5C, against the bias of its associated biasing element, to move inwardly of the joint body 43. Sufficient pressure on the bassinet unlocking button 53 therefore disengages the second connecting arm 33 from the bassinet locking lever 51 and thus enables both the first and second connecting arms 31, 33 to pivot relative to the joint 15 and thus for the bassinet 7 to fold, with the joint connecting rod 46 (and hence the joints 15 themselves) moving relative to the bassinet frame 19 by sliding rearwardly along the slot 27a of the mounting plates 27 (see Figs. 5D and 5E), enabling the upper frame 29 to collapse down directly on top of the bed 17 giving the bassinet 7 a longitudinally compact folded form.

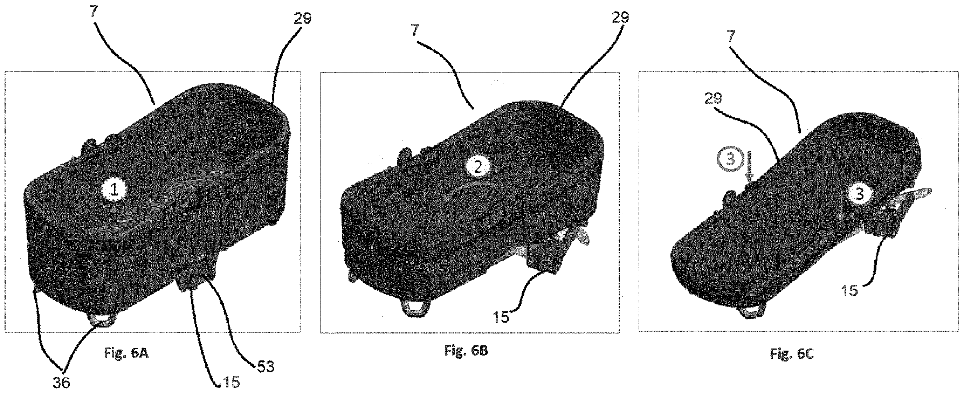

Hence, folding of the bassinet is initiated simply by pressing the bassinet unlocking button 53. This button may be pressed by either a) a moving part of the chassis 3 when the bassinet 7 is mounted on the chassis 3 (this corresponds to the folding process of Fig. 3, described below), or b) a user pressing the button with their finger or an appropriate tool when the bassinet 7 is used independently of the foldable chassis 9 (this is the folding process of Fig. 6, also discussed below).

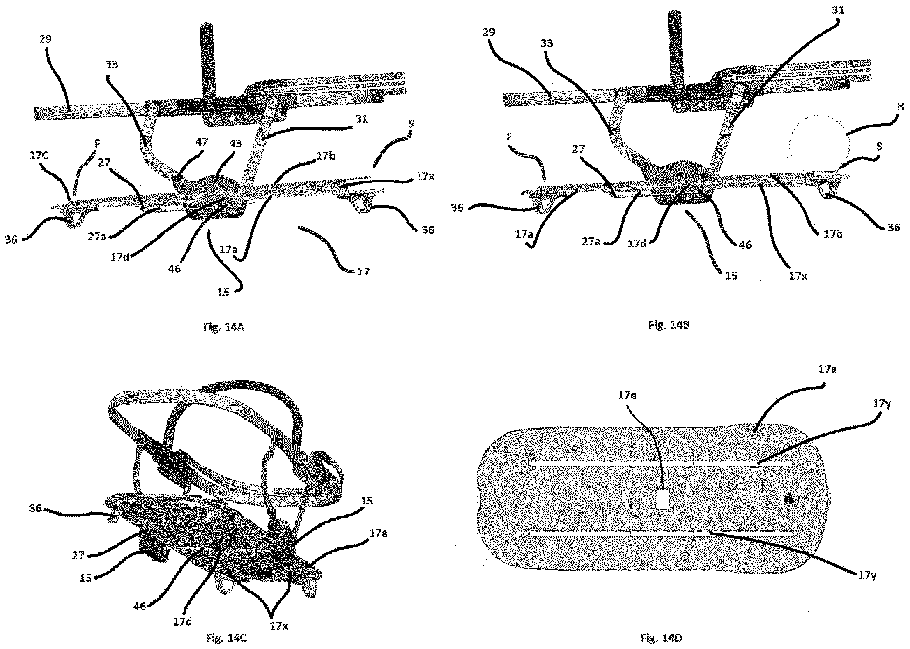

It is however highly desirable to avoid the inadvertent folding of the bassinet 7 whilst a child is still present within the bassinet. With this in mind, the bassinet 7 is provided with a movable bed part and a blocking element which provide a failsafe locking feature to prevent inadvertent or unintentional folding, in particular to avoid the bassinet 7 folding whilst a child is present in the bassinet 7. This arrangement will now be described with reference to the various parts of Fig. 14, of which Fig. 14A shows the blocking element in a retracted position when no child is present in the bassinet, Figs. 14B and 14C show the blocking element in a fold blocking position corresponding to when a child is present in the bassinet and Fig. 14D shows a base plate 17a of the bed 17; the fabric layers 21, 23 are omitted from these figures, for clarity of illustration.

As shown in Fig. 14A, the bed 17 comprises a planar base plate 17a to which a movable plate 17b (being an example of a movable bed part) is mounted at its first end F by hinge 17c, to enable a second, opposite end S of the movable plate 17b to pivot towards and away from the base plate 17a. The second end S of the movable plate 17b is located at the "head" end of the bassinet 7 i.e. at the end of the bassinet 7 at which the head of the infant is intended to be placed and which is distal from a user when the bassinet 7 is mounted on the stroller. As the head of the infant is a relatively heavy body part, it more reliably moves the movable bed part 17b of the present embodiment to prevent inadvertent folding of the bassinet 7.

The movable plate 17b extends for the majority of the length (left to right direction in Figs. 14A and 14B) of the planar base plate 17a and is biased into a first position (a spaced position) shown in Fig. 14A, with the second end S spaced from the base plate 17a, by a biasing element e.g. a spring (not shown). It is envisaged that a lightweight mattress would be placed over the upper surface of the movable plate 17b; the bias of the biasing element would be sufficient to keep the movable plate 17b in its first, spaced position with such a mattress in place. As will be appreciated from the following, this in turn prevents needless disruption to the folding of the bassinet 7 when a child is absent. For example, the biasing element may be of sufficient strength/resilience to keep the movable plate 17b in its first position with a mass of up to 1 kg or 1.5 kg placed on the movable plate 17b.

On the other hand, when a child is placed on the bed 17, the weight of the child (typically, at least 2 kg) overcomes the bias of the biasing element to move the movable plate 17b downwardly to a second position (an abutting position) at which the movable plate 17b abuts and lies flat against the base plate 17a, as shown in Fig. 14B (here, the head of a notional child placed within the bassinet is indicated schematically by the circle "H").

The underside of the movable plate 17b is provided with a single and centrally located blocking element 17d. In the present embodiment the blocking element takes the form of a downwardly depending triangular-shaped projection 17d, although other shaped projections may also be used, as appropriate. The base plate 17a is provided in turn with a central aperture 17e (see Fig. 14D) corresponding to the position of the blocking element 17d on the underside of the movable plate 17b. As best shown in Fig. 14C, this arrangement enables the blocking element 17d to protrude through the base plate 17a when the movable plate 17b is in its abutting position (i.e. position of Fig. 14B), so that the blocking element 17d is moved to a blocking position at which the blocking element 17d blocks the sliding path of the joint connecting rod 46 within the slots 27a of the mounting plates 27, therefore preventing the bassinet 7 from folding with a child present. In contrast, when the child is removed, the movable plate 17b is biased into its spaced position (i.e. position of Fig. 14A) by the biasing element, moving the blocking element 17d to a retracted position out of the sliding path of the rod 46, and thus permitting folding of the bassinet 7.

Preferably, the blocking position which is adopted by the blocking element 17d is located at the very beginning of the sliding movement path (path defined by the slots 27a in the mounting plates 27) of the joint connecting rod 46, meaning that the movement of the rod 46 (and hence collapse of the bassinet 7) is entirely prevented when a child is present in the bassinet 7. However, this need not be the case - rather than entirely preventing the movement of the rod 46, the full movement range of the joint connecting rod 46 may instead be merely restricted e.g. the blocking position adopted by the blocking element 17d may be located a short distance along the sliding movement path of the rod within the slots 27a in the mounting plates 27, rather than immediately at the beginning of that movement path, thus permitting the rod 46 to move slightly (and hence for the bassinet 7 to collapse slightly) before further rod movement and bassinet collapse is prevented. That is, a certain degree of tolerance may be permitted before further folding/collapse of the bassinet 7 is prevented.

Optionally, the underside of the movable plate 17b may be further provided with one or more ribs 17x to provide the movable plate 17b with extra rigidity; in the illustrated embodiment, two ribs 17x are employed, one on each lateral side of the movable plate 17b. Where this is the case, the base plate 17a is provided with a corresponding number of slots 17y to allow the ribs 17x to pass through to the underside of the base plate 17a, without inhibiting movement of the movable plate 17b.

From the foregoing, it will be appreciated that the failsafe locking feature provided by the movable plate 17b and its blocking element 17d prevents inadvertent folding of the bassinet 7 whilst a child is within the bassinet 7, without interfering with the proper folding of the bassinet 7 when the child has been safely removed. This will be the case regardless of whether the bassinet 7 is used independently of the stroller (with a user manually operating the bassinet unlocking button 53) or with the bassinet 7 mounted on the stroller and the basinet unlocking button 53 being actuated by a moving part of the stroller chassis. For the latter case, the precise configuration of such a moving part of the chassis is immaterial to the present invention, but one example is described later, by way of illustration. Before then, a number of alternative embodiments of a foldable bassinet aspect of the present invention will be described.

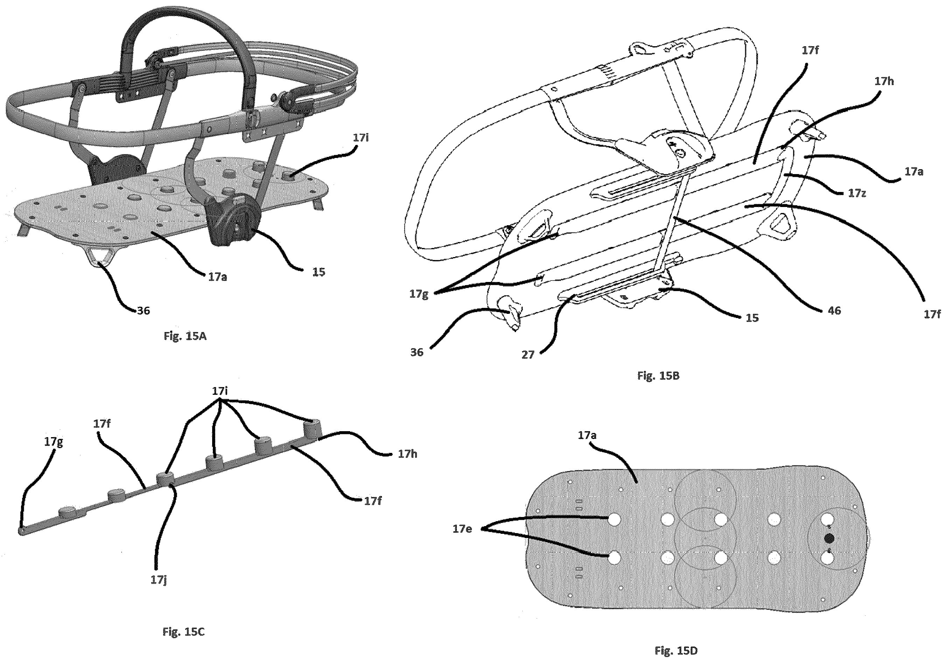

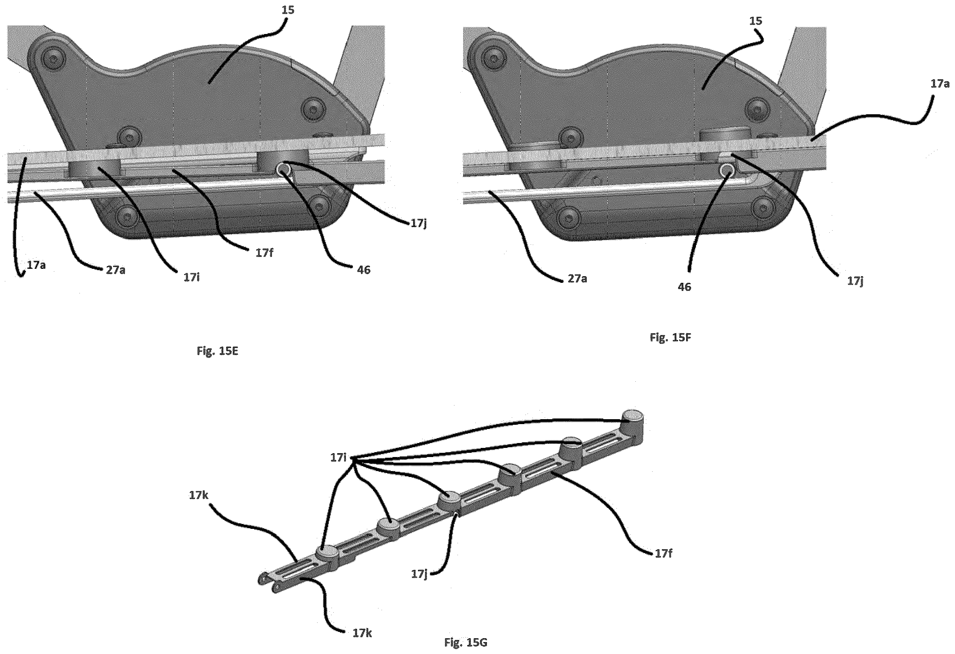

A second embodiment of a bassinet 7 according to the present invention is shown in the various parts of Fig. 15; the fabric layers 21, 23 are omitted from these figures, for clarity of illustration. The following discussion focusses on the differences between the foregoing first embodiment and the present second embodiment of the bassinet 7; beyond these differences, the bassinet 7 of the present second embodiment otherwise corresponds to that of the first embodiment and similar parts will be given the same reference signs.

The bassinet 7 of the second embodiment is again provided with a planar base plate 17a, but instead of having a movable plate, the second embodiment is provided with a movable bed part in the form of one or more (in the present case, two) longitudinally-extending arms 17f which are pivotally mounted at their first ends 17g (see Figs. 15B and 15C) to the underside of the base plate 17a to allow the second ends 17h to move towards and away from the base plate 17a. The upper sides of the arms 17f (i.e. the sides adjacent the base plate) are provided with one or more projections 17i (in the present embodiment, six projections) at locations corresponding to respective apertures 17e in the base plate 17a. Biasing elements (not shown) e.g. one or more springs are provided in a bracket 17z located adjacent the second ends 17h of the arms 17f to bias each arm 17f into a first position adjacent the base plate 17a, with the projections 17i protruding through the apertures 17e to project beyond the upper surface of the base plate 17a, as shown in Fig. 15F. It is envisaged that a lightweight mattress would be placed over the projections 17i; as with the first embodiment, the bias of the biasing elements would be sufficient to keep the arms 17f in their first position with such a mattress in place.

On the other hand, when a child is placed on the bed 17, the weight of the child applied to the projections 17i of the movable arms 17f overcomes the bias of the biasing elements to move the arms 17f downwardly to a second position (a spaced position) at which the projections 17i lie flush with the upper surface of the base plate 17a, as shown in Fig. 15E. In this position, a notch or recess 17j provided on the lower surface of the arms (surface distal from the base plate 17a) engages with the joint connecting rod 46 and thus comprises a blocking element which prevents the rod 46 from sliding within the slots 27a in the mounting plates 27 and thus also preventing the bassinet 7 from being inadvertently folded with the child present. When the child is removed from the bassinet 7, the biasing elements once more lift the arms 17f into their first position, releasing the joint connecting rod 46 and hence allowing the bassinet 7 to fold normally.

Beneficially, placing the movable arms 17f on the underside of the base plate 17a (as opposed to above the base plate 17a, as in the first embodiment) removes any small risk of the mattress becoming trapped between the movable arms 17f and the base plate 17a to foul the movement of the movable arms 17f.

The arms 17f may move independently of each other, meaning that a single one of the arms may move to the second position e.g. when the child is present on one or other side of the bassinet 7, or both arms may move down to the second position e.g. when the child is located centrally on the bed. In either case (i.e. a single arm is moved to its second position or both arms are moved to the second position), the engagement between the arm(s) 17f and the joint connecting rod 46 is sufficient to prevent the bassinet 7 from folding.

As shown in Fig. 15G, in a modification of the second embodiment also being an embodiment of the present invention, the arms 17f may be stiffened as desired with additional longitudinal ribs 17k.

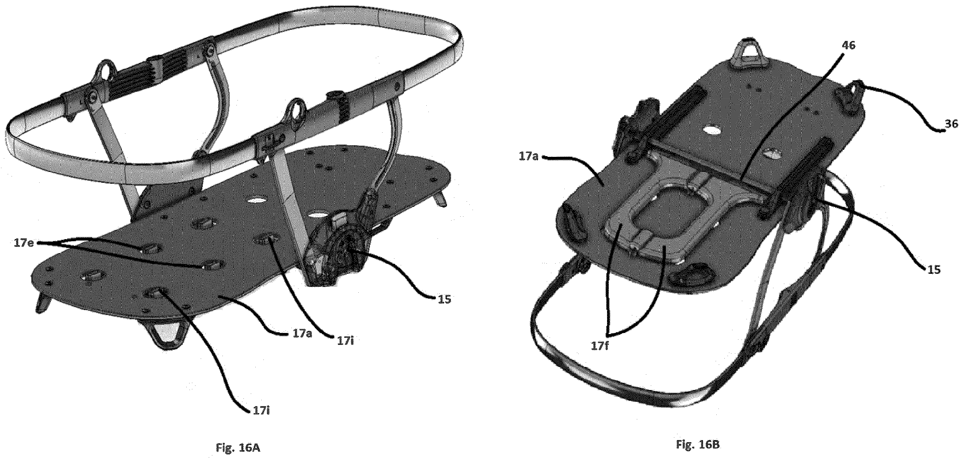

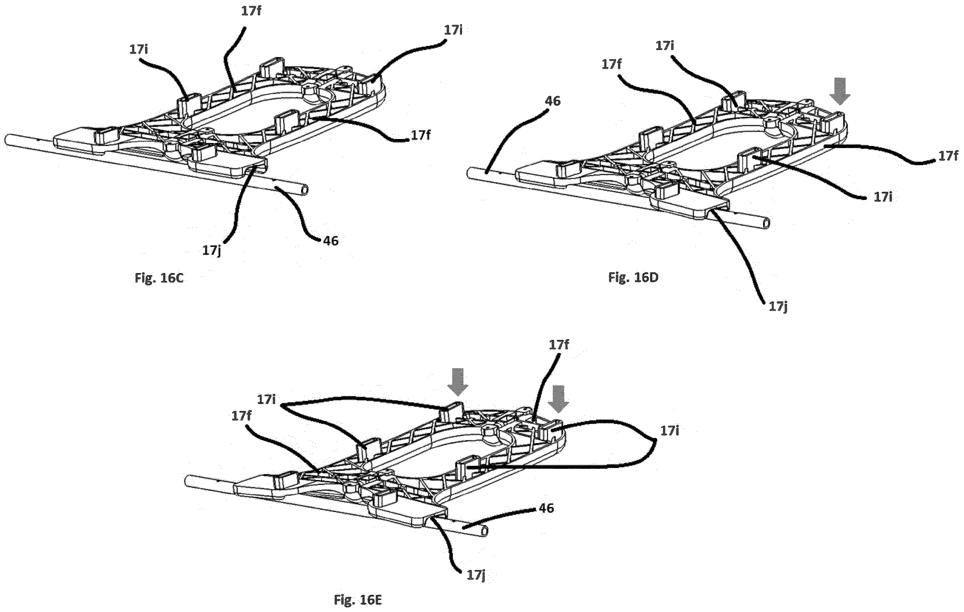

A third embodiment of a bassinet 7 according to the present invention is shown in the various parts of Fig. 16, with fabric layers 21, 23 omitted and with Figs. 16C to 16E showing only the arms 17f and joint connecting rod 46, for clarity of illustration. The following discussion focusses on the differences between the foregoing second embodiment and the present third embodiment of the bassinet; beyond these differences, the bassinet of the present third embodiment otherwise corresponds to that of the second embodiment and like parts will be given the same reference numerals.

As shown in Fig. 16A, according to the third embodiment the base plate 17a is again provided with a plurality of apertures 17e. A pair of arms 17f (movable bed parts) are hingedly mounted on the underside of the base plate so that projections 17i provided on the upper side of the arms 17f (the side adjacent the base plate 17a) protrude through the apertures 17e when the arms 17f are biased into a position adjacent the base plate 17a by suitable biasing elements such as springs (not shown). It is envisaged that a lightweight mattress would be placed over the projections 17i; as with the preceding first and second embodiments, the bias of the biasing elements would be sufficient to keep the arms 17f in their first position with such a mattress in place.

In the present embodiment the arms 17f are hinged centrally on the base plate 17a and the hinge axis is parallel to the longitudinal (major length) axis of the bassinet 7, rather than perpendicular to the longitudinal axis as in the second embodiment. Additionally, the arms 17f extend for (approximately) only half the length of the bassinet 7, rather than substantially the full length of the bassinet in the second embodiment. As such, the arms 17f of the present embodiment are typically more rigid than those of the second embodiment.

The arms 17f of the present third embodiment are located at the "head" end of the bassinet 7 i.e. the end at which the head of a child is intended to be placed and which is distal from a user when the bassinet 7 is mounted on the stroller. As the head of the child is a relatively heavy body part, it more reliably moves the arms 17f of the present embodiment to prevent inadvertent folding of the bassinet 7.

In particular, and similar to the second embodiment, when a child is placed on the bed 17, the weight of the child (and in particular, the child's head) overcomes the bias of the biasing elements to move the arms 17f downwardly to a second position (a spaced position) at which the projections lie flush with the upper surface of the base plate 17a (see Figs. 16D and 16E). In this position, a blocking element in the form of a notch or recess 17j provided on the lower surface of the arms (surface distal from the base plate 17a) engages with the joint connecting rod 46 to prevent the rod 46 from sliding within the slots 27a in the mounting plates 27 and hence prevents the bassinet 7 from being inadvertently folded with the child present. The arms 17f may move independently of each other, meaning that a single one of the arms 17f may move to the second position e.g. when the child is present on one or other side of the bassinet 7 (see Fig. 16D), or both arms 17f may move down to the second position e.g. when the child is located centrally on the bed 7 (see Fig. 16E). In either case (i.e. a single arm is moved to its second position or both arms are moved to the second position), the engagement between the arm(s) 17f and the joint connecting rod 46 is sufficient to prevent the bassinet 7 from folding. Conversely, when the child is removed from the bassinet 7, the biasing elements once more lift the arm(s) 17f into their first position, releasing the joint connecting rod 46 and hence allowing the bassinet 7 to fold normally.

In each of the above first to third embodiments one or more blocking elements 17d are moved, as a result of a child being placed into the bassinet, into a blocking position lying along the movement path of a part of the frame (in these embodiments, the joint connecting rod 46) which otherwise moves during normal folding of the bassinet, such that inadvertent bassinet folding is prevented. According to a fourth embodiment of the present invention, the movement of another part of the bassinet, other than the joint connecting rod, is blocked from moving by a blocking element. And, in this fourth embodiment, the moving part is one which moves in a preliminary step to enable the bassinet to begin folding, rather than a part which moves during the actual folding of the bassinet.

Specifically, in the fourth embodiment, the bassinet locking lever 51 is prevented from moving to disengage with the second connecting arm 33 when a child is present in the bassinet, thus preventing inadvertent folding of the bassinet 7 overall.

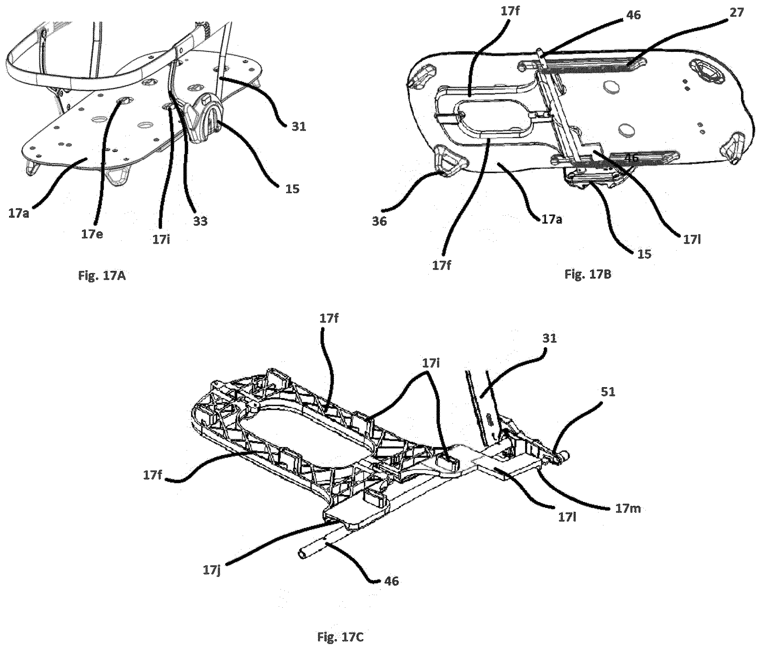

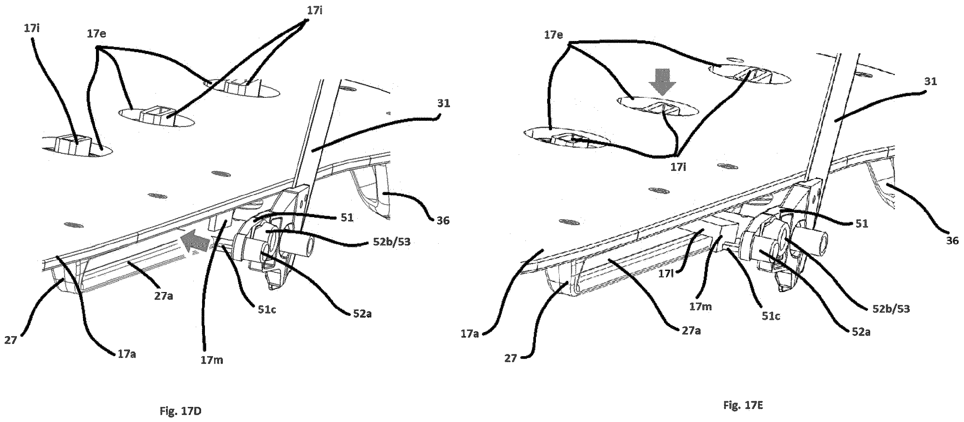

This fourth embodiment is shown in the various parts of Fig. 17, with fabric layers 21, 23 omitted for clarity of illustration. The following discussion focusses on the differences between the foregoing third embodiment and the present fourth embodiment of the bassinet; beyond these differences, the bassinet of the present fourth embodiment otherwise corresponds to that of the third embodiment, and like parts are given the same reference signs.

As shown in Figs. 17A and 17B, according to the fourth embodiment the base plate 17a is again provided with a plurality of apertures 17e. A pair of arms 17f, similar to those of the third embodiment, are hingedly mounted on the underside of the base plate 17a so that projections 17i provided on the upper side of the arms (the side adjacent the base plate) protrude through the apertures 17e when the arms 17f are biased into a position adjacent the base plate 17a by suitable biasing elements such as springs (not shown). It is envisaged that a lightweight mattress would be placed over the projections 17i; as with the preceding first to third embodiments, the bias of the biasing element would be sufficient to keep the arms 17f in their first position with such a mattress in place.

As with the third embodiment, the arms 17f are hinged centrally on the base plate 17a with the hinge axis parallel to the longitudinal (major length) axis of the bassinet 7 and are located at the "head" end of the bassinet 7 i.e. at the end of the bassinet at which the head of an infant is intended to be placed and which is distal from a user when the bassinet 7 is mounted on the stroller.

Unlike the third embodiment, one or both (in the illustrated embodiment, one) of the arms 17f is provided with a blocking portion in the form of a protrusion 171 which extends towards an adjacent one of the two joints 15 of the bassinet. As seen from Figs. 17C, 17D and 17E, this protrusion 171 is provided with a vertically extending end wall 17m. This end wall 17m, along with the rest of the protrusion 171, moves together with the movement of the hinged arm 17f.

Hence, when a child is placed on the bed 17, the weight of the child overcomes the bias of the biasing elements to move the arms 17f downwardly to a second position (a spaced position) at which the projections lie flush with the upper surface of the base plate 17a. As shown in Fig. 17E, this moves the end wall 17m of the protrusion 17l into a blocking position which blocks the bassinet locking lever 51 from moving inwardly, preventing the protrusion 52a of the bassinet locking lever 51 from disengaging with the second connecting arm 33 (omitted from the figure for clarity), and thus preventing also the inadvertent folding of the bassinet 7. In particular, contact between a laterally-extending pin 51c on the rear surface of the bassinet locking lever 51 and the end wall 17m of the protrusion blocks inward movement of the bassinet locking lever 51.

Conversely, when the child is removed from the bassinet 7, the biasing elements lift the arm 17f into its first position, thus also lifting the end wall 17m of the protrusion to a position at which it does not block movement of the bassinet locking lever 51 (see movement arrow in Fig. 17D, indicating direction of movement of the bassinet locking lever 51 when the bassinet unlocking button 53 is pressed), hence allowing the bassinet 7 to fold normally.

In the present embodiment, the arms 17f are again provided with notches 17j on their lower surfaces, as in the third embodiment, to also block movement of the joint connecting rod 46 when a child is present. However, in a modification of the fourth embodiment, being also an embodiment of the present invention, these notches are omitted, and the variant instead relies entirely upon the blocking action of the end wall 17m to prevent inadvertent folding of the bassinet 7.

In a further modification of the of the fourth embodiment, being also an embodiment of the present invention, the protrusion 171 is further extended and modified so that, rather than blocking the bassinet locking lever 51 from the rear as in the illustrated fourth embodiment, the vertically extending end wall 17m provided at the end of the protrusion 17l is instead moved into a blocking position at which it covers the bassinet unlocking button 53 when a child is placed in the bassinet, preventing the bassinet unlocking button 53 from being pressed (and thus preventing the bassinet unlocking button from moving) and so preventing inadvertent folding of the bassinet 7.

As noted above, actuation of the bassinet unlocking button 53 is a necessary preliminary to the folding of the bassinet 7. This button 53 may be manually actuated by a user when the bassinet 7 is used independently of the stroller, or may be actuated by a moving part of the stroller chassis. In the latter case, the precise configuration of the moving part of the chassis is immaterial to the bassinet aspect of the present invention; it is merely enough that the moving part contact the bassinet unlocking button 53 to enable the bassinet to fold. One example of a chassis having a suitable moving part is however described in the following, by way of illustration, beginning with reference to Fig. 2.

As shown in Fig. 2 (which omits the sidewalls of the bassinet, for clarity, and shows the bassinet 7 with optional canopy C attached), the wheeled chassis 3 of the present illustrative embodiment of the stroller aspect of the present invention comprises a foldable chassis 9 in the form of a foldable, wheeled base frame, a telescopic handle 11 for both moving (e.g. pushing, pulling and steering) and folding the stroller 1 and a pair of joints 13 on each lateral side of the foldable chassis 9, to enable the foldable chassis 9 to fold and also to make releasable connections with the folding joints 15 on each lateral side of the bassinet 7.

In the present illustrative embodiment, the base frame of the foldable chassis 9 comprises front and rear frame portions 59, 61 which are hingedly connected to each other at pivot points 63 provided in each chassis joint 13, thus allowing the overall foldable chassis to fold. Optionally, locking mechanisms (described further below) may be provided in each joint 13, to prevent inadvertent folding of the foldable chassis 9.

The front frame portion 59 has a generally "U"-shaped configuration and is formed by two parallel front frame arms 65 joined in the vicinity of their forward ends (i.e. the ends distal of the pivot points 63) by a transverse strut 67. A "self stand" 69, employed during the folding process, is located centrally on the transverse strut 67. The forward ends of the front frame arms 65 each serve as a mounting point for a respective one of a pair of front wheels 71 of the stroller 1. The front wheels 71 are connected to the front frame arms 65 by stems 73, which are themselves pivotally mounted to forward ends of the front frame arms 65 by swivel joints 75, to allow the front wheels 71 to turn relative to the central longitudinal axis of the stroller 1 and thus give steerage.

The rear frame portion 61 takes a generally "U"-shaped configuration formed by two parallel rear frame arms 77 joined in the vicinity of their rearward ends (i.e. the ends distal of the pivot points 63) by a transverse strut 79. The rearward ends of the rear frame arms 77 each serve as a mounting point for a respective one of a pair of rear wheels 81 of the stroller 1.

The telescopic handle 11 comprises a pair of outer tubes 83 fixed relative to the front frame arms 65 and within which a pair of inner tubes 85 are slidable upon appropriate actuation of buttons located within a button housing 87 mounted centrally on a handle crossbar 89 which joins the two inner tubes.

The outer tubes 83 are fixed to and open into the (hollow) front frame arms 65, to permit the forward ends of the inner tubes 85 to penetrate forwards into the front frame arms 65 as the telescopic handle 11 is collapsed, before eventually exiting through apertures 91 in the front frame arms 65 when the handle 11 is fully collapsed, where they act to support the stroller 1 in its folded state (see Fig. 3E).

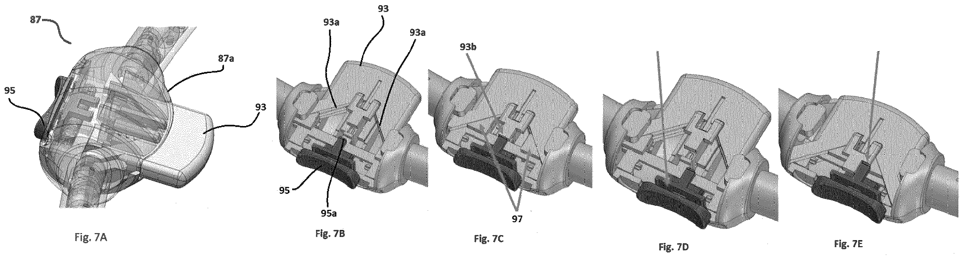

The button housing 87 of the handle 11 is shown in greater detail in the various parts of Fig. 7, in which an outer casing 87a of the housing 87 is shown in phantom in Fig. 7A, and omitted entirely in the remaining parts, for clarity of illustration. Housed within the button housing 87 are a primary handle adjustment button 93 and a secondary handle adjustment button 95, as well as a pair of movable sliding elements 97 which ride on respective angled inner faces 93a of the primary handle adjustment button 93.

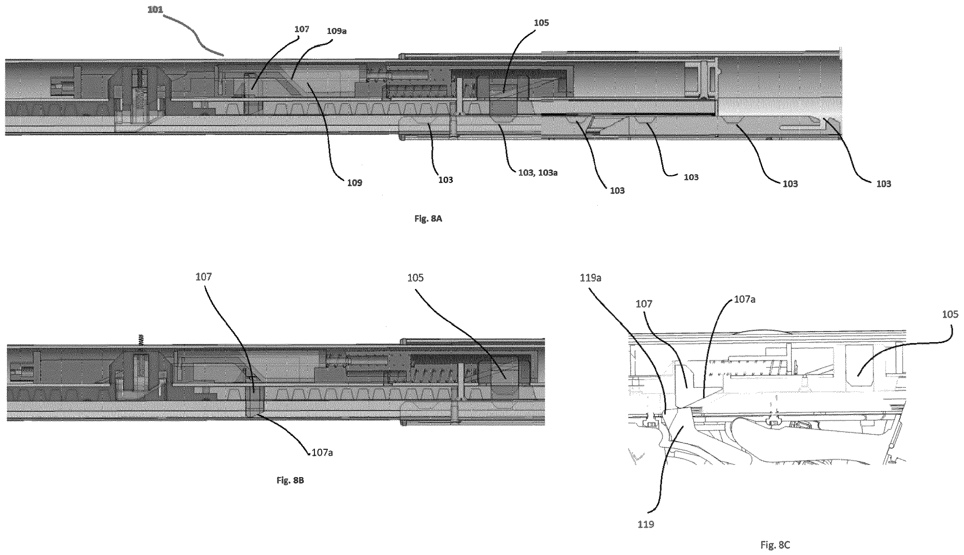

Each of the sliding elements 97 is attached via a cable (not shown) to a respective one of a pair of handle locking systems, one of which is shown generally at 101 in Fig. 8A. The handle locking system 101 is located within the handle 11 and is distributed over the outer/inner tube pair 83, 85 on one side of the handle 11. The other handle locking system is distributed over the other outer/inner tube pair on the other side of the handle 11 and is identical to that shown in the various parts of Fig. 8.

The handle locking system 101 chiefly comprises a series of indents 103 on the inner surface of the (fixed position) outer tube 83, as well as a movable locking height adjustment tab 105, a chassis fold tab 107 and chassis fold tab actuator 109 all provided on the (movable) inner tube 85 of the handle 11. The indents 103 correspond to a plurality of predetermined handle heights with which the locking height adjustment tab 105 may be selectively engaged, so as to fix the handle 11 at the desired height. The chassis fold tab 107 and chassis fold tab actuator 109 are used when the stroller 1 is being folded.

With the stroller 1 in its normal unfolded condition (see Fig. 2), the primary and secondary handle adjustment buttons 93, 95 and the sliding elements 97 are biased by respective biasing elements such as springs (not shown) into their initial positions shown in Figs. 7A and 7B, and the locking height adjustment tab 105 is similarly biased by a locking height adjustment tab biasing element such as a spring (not shown) to protrude outwardly into engagement with an initial position indent 103a, corresponding to an initial predetermined handle height, as shown in Fig. 8A.

To adjust the height of the handle 11, a user presses the primary handle adjustment button 93 into the button housing 87, which moves the sliding elements 97 towards each other as they slide on the angled inner faces of the primary handle adjustment button 93 (see Fig. 7C). This movement of the sliding elements 97 pulls on the cables within the handle 11, which in turn results in the locking height adjustment tab 105 being retracted from engagement with the initial position indent 103a, thus releasing the handle 11 from fixture at its initial height position. The user may then move the handle 11 to another of the predetermined handle height positions and release the primary handle adjustment button 93, causing the sliding elements 97 to return to their initial positions under bias of their respective biasing elements (not shown). The earlier pull on the cable is now released, causing the locking height adjustment tab 105 to protrude into engagement with the indent 103 at the current handle height position as a result of the bias applied by the locking height adjustment tab biasing element (not shown). The handle 11 is thus secured at its new height position.

Here, it should be noted that the extent of movement of the primary handle adjustment button 93 into the button housing 87 (and therefore the amount by which the cables are pulled by the sliding elements 97) is limited by a projection 95a of the secondary handle adjustment button 95, which acts as an end stop by coming into contact with a corresponding projection 93b provided on the primary adjustment handle 93.

When folding the stroller 1, the user additionally actuates the secondary handle adjustment button 95, by sliding it laterally to a position at which the projections 93a, 95a are not aligned and so do not come into contact, as shown in Figs. 7D and 7E. This increases the range of movement of the primary handle adjustment button 93 into the button housing 87, and therefore increases the amount by which the cables are pulled by the sliding elements 97. This further pulling of the cables causes an inclined face 109a of the chassis fold tab actuator 109 to contact the chassis fold tab 107, forcing it to protrude outwardly from the inner tube 85 (as shown in Figs. 8B and 8C, discussed below). The protruding chassis fold tabs 107 of the handle locking systems 101 are then used to unlock locking mechanisms in each of the chassis frame joints 13 (described in greater detail hereinafter), which then allows the foldable chassis 9 to start folding.

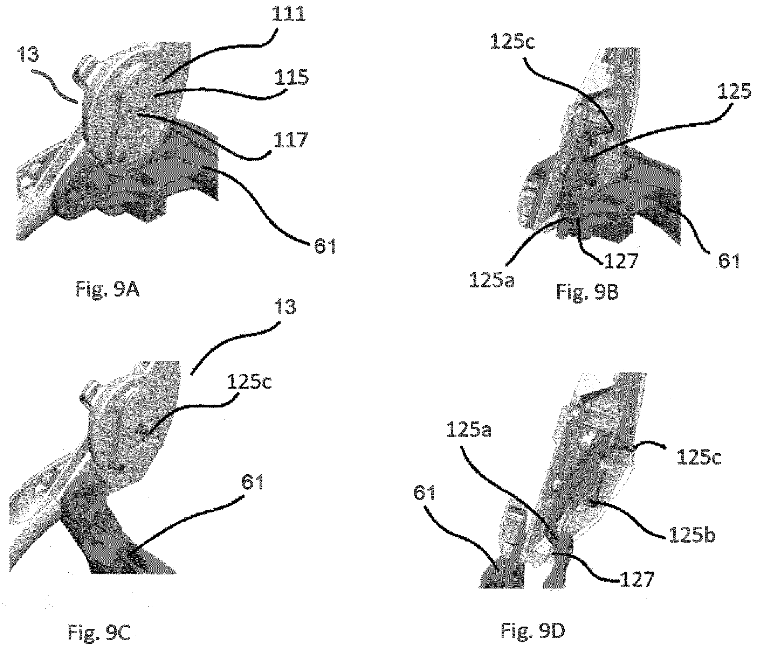

Figs. 9 to 13 show a first of the two chassis frame joints 13, which is located on a first side of the foldable chassis 9; the second of the two joints 13, on the other side of the foldable chassis 9, takes the same configuration. Each joint 13 comprises a joint housing 111 fixed to the outer tube 83 of the handle 11 (and therefore also fixed relative to the front frame potion 59 of the foldable chassis 9) and in which various joint components are contained, as well as the above-mentioned pivot point 63 which serves as the hinged connection between the front and rear frame portions 59, 61. A mounting portion 115, which in the present embodiment takes the form of a generally triangular-shaped protrusion with a rounded apex uppermost, is formed on the outer surface of the joint housing 111 for co-operation with the mounting portion 45 of the corresponding bassinet joint 15, to support and secure the bassinet 7 in place on the foldable chassis 9. An aperture 117 is located to coincide with the position of the mounting portion 115, and in particular to coincide with the location of the bassinet unlocking button 53 in the bassinet joint 15 when the bassinet 7 is supported on the foldable chassis 9. As discussed further below, this enable the bassinet unlocking button 53 to be pressed automatically when the foldable chassis 9 is being folded, thus allowing the bassinet 7 to fold also (provided that a child is not present in the bassinet).

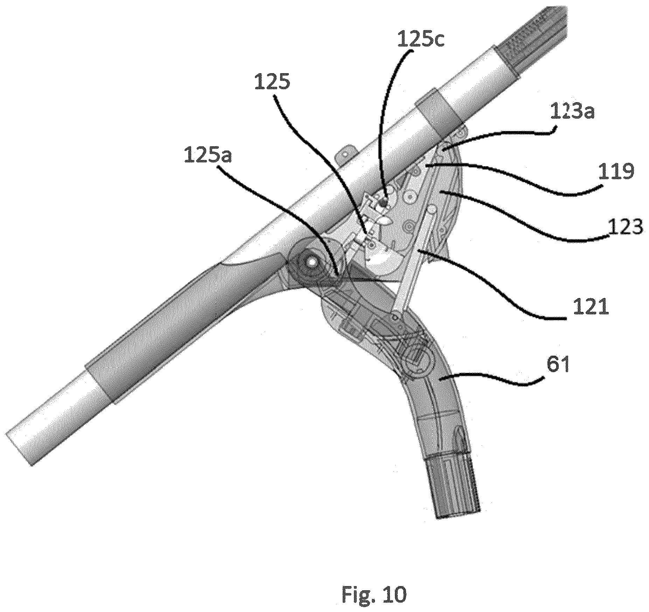

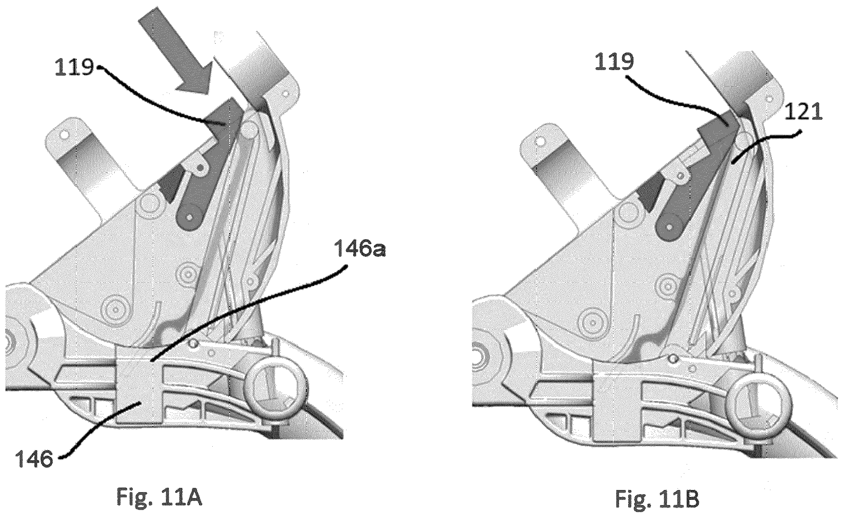

Located within the joint housing 111 are a pivotally-mounted chassis unlocking lever 119 (see figs. 10 and 11), a locking beam 121 (see Fig. 10), a locking beam track 123 formed on an internal face of the joint housing 111 (see Fig. 10), and a secondary fold actuator lever 125 which rides on a cam surface 127 formed on the rear frame portion 61 (see Figs. 9B and 9D).

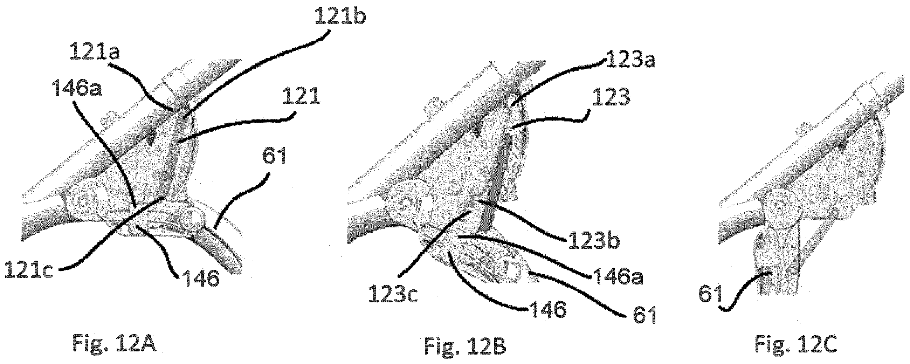

As shown in the various parts of Fig. 12, the locking beam 121 has a floating first end 121a provided with a protrusion 121b and a second end 121c which is pivotally mounted to the upper end of the rear frame portion 61. When the stroller 1 is in its initial unfolded condition (i.e. the condition shown in Fig. 2), the locking beam 121 adopts the initial position shown in Fig. 12A. Here, the protrusion 121b seats within an unfolded condition locking indent 123A at a first (upper) end of the locking beam track 123, thus fixing the rear frame portion 61 in position relative to the handle 11 and front frame portion 59. The locking beam 121 and locking beam track 123 therefore act as a chassis locking mechanism, holding the foldable chassis 9 in its unfolded state until a user choses to fold the stroller 1.

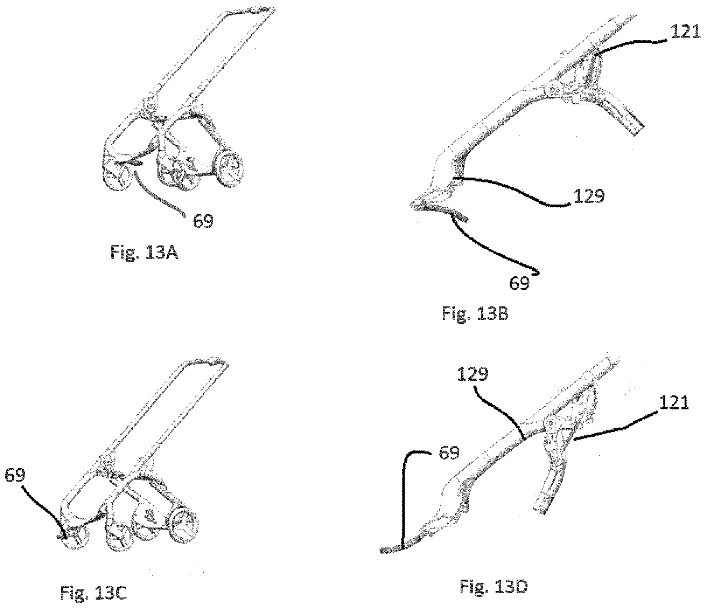

The locking beam 121 is additionally connected to the self stand 69 by a cable 129 (see Figs. 13B and 13D). The self stand 69 is movable between a retracted condition (see figs. 13A and 13B) and an extended condition (see Figs. 13C and 13D). A biasing element such as a spring (not shown) acts to bias the self stand 69 into the extended condition. However, tension is applied to the cable when the locking beam 121 is in its initial position of Fig. 12A, meaning that the self stand 69 is held in its retracted condition when the stroller 1 is unfolded.

In order to fold the stroller 1, after ensuring that a child is not present in the bassinet a user actuates the secondary handle adjustment button 95 in the button housing 87, by sliding it laterally to the position shown in Fig. 7D, and depresses the primary handle adjustment button 93 to the extended position shown in Fig. 7E. This initial step is shown in Fig. 3A. As described above, these actions disengage the locking height adjustment tab 105 from the indents 103 on the outer tube 83, enabling the telescopic handle 11 to start to collapse (see fig. 3B), and cause the chassis fold tab 107 to protrude outwardly from the inner tube 85.

Continued collapse of the telescopic handle 11 (i.e. continued downward movement of the inner tubes into the outer tubes) causes the protruding chassis fold tab 107 to come into contact with and apply pressure having a downward component to the chassis unlocking lever 119 (see Fig. 8C; the arrow in Fig. 11A shows the downward force component applied by the protruding chassis fold tab 107). The protruding chassis fold tab has an inclined face 107a to contact the chassis unlocking lever 119 for smooth actuation of the lever; the leading edge of the chassis unlocking lever 119 may also have a rounded corner 119a (see Fig. 8C) to facilitate smooth contact between the chassis fold tab 107 and the chassis unlocking lever 119.

The downward force applied by the chassis fold tab 107 causes the chassis unlocking lever 119 to pivot such that it contacts the first (upper) end of the locking beam 121 (see Fig. 11B). This contact unseats the locking beam 121 from the unfolded condition locking indent 123a, thus releasing the rear frame portion 61 from its fixed position relative to the telescopic handle 11 and front frame portion 59. The user now simply tilts the stroller 1 forward using the handle 11 (see arrow in Fig. 3C), thus lifting the rear end of the stroller 1 such that the (unlocked) rear frame portion 61 swings forward under gravity, towards the front frame portion 59, and so starting to fold the foldable chassis 9.

Because the second (lower) end of the locking beam 121 is pivotally mounted to the rear frame portion 61, it is pulled downwardly along the locking beam track 123 by the folding movement of the rear frame portion 61 (see Figs. 12B and 12C). This downward movement of the locking beam 121 releases the tension on the cable 129, enabling the self stand 69 to adopt its extended condition (see Figs. 13C and 13D). Hence, as the stroller 1 is tilted forward, the self stand 69 extends and comes into contact with the ground surface, resulting in the front wheels 71 being lifted from the ground surface. Friction between the self stand 69 and the ground surface assists with continued folding of the foldable chassis 9 by tilting the stroller 1 further forward.

Provided that a child is not present in the bassinet, the folding of the foldable chassis 9 will also unlock the bassinet 7 from its unfolded condition. Referring to Figs. 9 and 10, and as noted above, the secondary fold actuator lever 125 (and more specifically, a first end 125a thereof) rides on a cam surface 127 formed on the rear frame portion 61. It will therefore be appreciated that the forward movement of the rear frame portion 61, as it folds forwardly, results in movement of the secondary fold actuator lever 125 governed by contact between the first end 125a of the secondary fold actuator lever 125 and the cam surface 127. Here, movement of the cam surface 127 relative to the secondary fold actuator lever 125, as the foldable chassis 9 folds, causes the first end 125a of the secondary fold actuator lever 125 to move further into the joint housing 111 (i.e. away from the mounting portion 115), causing the secondary fold actuator lever 125 to pivot about its pivot point 125b, which is located between the first end 125A and a second end 125c of the secondary fold actuator lever 125, such that the second end 125c of the secondary fold actuator lever 125 moves towards and ultimately protrudes through the aperture 117 formed in the joint housing 111 (see Figs. 9C and 9D), to press the bassinet unlock button 53 in the bassinet joint 15.

Provided that no child is present within the bassinet, the bassinet 7 will then collapse into its folded condition by gravity acting to pull the (now unlocked) upper frame 29 downward (see Fig. 3D).

To complete the folding process, the user applies further downward pressure on the telescopic handle 11, resulting in the stroller 1 adopting its fully folded condition as shown in Fig. 3E, ready e.g. for convenient transport or storage of the folded package. In the present embodiment, the stroller 1 is stabilised in its folded condition by the forward ends of the telescopic handle 11, which protrude through apertures in the lower side of the folded foldable chassis 9 to support the stroller 1 on the floor (or other support) surface, in tandem with the rear wheels 81 of the stroller 1.

The foregoing describes the folding of the bassinet 7 in combination with folding of the foldable chassis 9, with the secondary fold actuator lever 125 being an illustrative example of a moving part of the stroller chassis suitable to actuate the bassinet unlocking button. It will however be appreciated that the bassinet 7 is usable independently of the foldable chassis 9. For example, a user may disengage the bassinet 7 from the foldable chassis 9 and use it in a nursery or other room, locating the bassinet 7 on the floor or other suitable support surface instead of on the foldable chassis 9, and operating the bassinet unlocking button manually.

The folding process of the bassinet 7, independent of the stroller frame, is now described with reference to Figs. 6A to 6C.

With the bassinet 7 empty, a user presses the bassinet unlocking button 53 of each bassinet joint 15, using either their fingers or a suitable pressing tool, to release the locking engagement of the bassinet frame 19 and joints 13 (see Fig. 6A). The user then presses downwardly and forwardly on the upper frame 29 (see arrow in Fig. 6B), to encourage the first and second connecting arm pairs 31, 33 of the bassinet frame 19 to start to pivot. Continued vertical downward pressure on the upper frame 29 (see arrow in Fig. 6C) collapses the bassinet 7 entirely, with the bassinet joints 15 sliding rearwardly to absorb longitudinal movement of the pivoting connecting arms 31, as described above, to allow the upper frame 29 to collapse directly downward onto the bed 17 and provide a compact folded footprint. Here, it will be noted that the feet 36 on the underside of the bed 17 provide sufficient ground clearance for the joints 15 and pivoting connecting arms 31, 33 to move freely throughout the fold process, without touching the floor surface (or other support surface e.g. table top).

To unfold the bassinet 7, a user need simply lift the upper frame 29, causing the joints 15 and first and second connecting arm pairs 31, 33 to move back towards their initial positions, until the bassinet locking lever 51 of each joint re-engages with its corresponding second connecting arm, preferably with an audible "click", to hold the bassinet 7 in its unfolded condition once more.

It will be appreciated that the foldable bassinet aspect of the present invention may equally be applied to foldable bassinets which are not adapted to be mounted on strollers and are instead solely intended for stand-alone use. Therefore, embodiments of the independent foldable bassinet aspect of the present invention extend beyond stroller-mountable bassinets to stand-alone bassinets not being configured for mounting on a stroller frame or similar.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

Thus, the foregoing embodiments of the invention have been described by way of example only. It will be appreciated by a person skilled in the art that various modifications can be made without departing from the scope of the invention as defined by the claims.

## Claims

1. A foldable bassinet comprising a foldable frame which may be moved between an unfolded condition and a folded condition and a bed on which a child may be placed, wherein the bed comprises a movable bed part which is configured to move from a first position to a second position when a child is placed on the bed, and wherein the foldable bassinet further comprises a blocking element which is moved by the movement of the movable bed part from a retracted position when the movable bed part is in its first position to a blocking position when the movable bed part is in its second position, wherein the blocking position is one at which the blocking element prevents or restricts the movement of a folding movement part of the foldable bassinet, which folding movement part moves either when the foldable frame is moved from its unfolded condition to its folded condition or which first moves to then allow the foldable frame to begin moving from its unfolded condition to its folded condition, such that the foldable frame is prevented from being moved to its folded condition when a child is present on the bed.

2. The foldable bassinet of claim 1, further comprising a biasing element which acts to bias the movable bed part to its first position when a child is not present on the bed, resulting in the blocking element being moved by the movable bed part to its retracted position, being a position which does not block the movement of the folding movement part of the foldable bassinet.

3. The foldable bassinet of claim 2, wherein the bias of the biasing element is overcome by placing a mass of 1 kg or more, preferably 1.5 kg or more, and more preferably 2 kg or more, on the movable bed part, such that the movable bed part moves to its second position when a child equal to or greater than said mass is placed on the movable bed part.

4. The foldable bassinet of any one of the preceding claims, wherein the folding movement part comprises part of the foldable frame, or is a part connected to the foldable frame.

5. The foldable bassinet of any one of claims 1 to 3, wherein the foldable frame comprises a locking mechanism which must be released before the foldable frame can begin moving from its unfolded condition to its folded condition, and wherein the folding movement part forms part or all of the locking mechanism.

6. The foldable bassinet of any one of the preceding claims, wherein the bed further comprises a planar bed plate to which the movable bed part is movably attached.

7. The foldable bassinet of claim 6, wherein the movable bed part is pivotally attached to the planar bed plate.

8. The foldable bassinet of claim 6 or claim 7, wherein the movable bed part is provided beneath the planar bed plate.

9. The foldable bassinet of any one of claims 6 to 8, wherein the movable bed part comprises one or more movable arms.

10. The foldable bassinet of claim 9, wherein the movable bed part comprises at least two arms which are movable independently of each other.

11. The foldable bassinet of claim 10, wherein different ones of the at least two arms are located on respective lateral sides of the bassinet.

12. The foldable bassinet of any one of claims 9 to 11, wherein the planar bed plate comprises a plurality of apertures, wherein the one or more movable arms are mounted underneath the planar bed plate, and wherein the one or more movable arms are each provided with one or more projections which protrude through respective ones of the plurality of apertures in the bed plate.

13. The foldable bassinet of any one of claims 9 to 12, wherein the one or more arms are pivotally mounted to the bed plate by respective hinges having a hinge axis which is parallel or perpendicular to a longitudinal axis of the bassinet.

14. The foldable bassinet of any one of claims 9 to 13, wherein the one or more arms are reinforced by one or more strengthening ribs.

15. The foldable bassinet of any one of claims 9 to 14, wherein the one or more arms extend for half or less than half of the longitudinal length of the bassinet and are located at an end of the bassinet at which the head of a child is intended to be placed.

16. A foldable stroller comprising the foldable bassinet of any one of the preceding claims and a foldable chassis supporting the foldable bassinet.
